# EUROPEAN PATENT APPLICATION

(11) **EP 4 761 062 A1**
(43) Date of publication of application: **17.06.2026**
(21) Application number: 24315574.4
(22) Date of filing: 12.12.2024
(51) Int. Cl.: H02K 1/02, H02K 1/14

(54) **ELECTRIC MOTOR WITH POLE EXTENSIONS**

(71) Applicant: Wilo France S.A.S., 92500 Rueil-Malmaison (FR)
(72) Inventor: BOULET, Thomas, 92500 Rueil-Malmaison (FR); MAES, Sylvere, 92500 Rueil-Malmaison (FR); LERAY, Charles, 92500 Rueil-Malmaison (FR)
(74) Representative: Cohausz Hannig Borkowski Wißgott

(57) **Abstract**

The inventions refers to an electric motor comprising a stator core (1), a plurality of coils (8) and a permanent-magnet rotor (2), the stator core (1) comprising a yoke (4) having a first axial length (L1), and a number of pole teeth (5) radially extending from the yoke (4) to the rotor (2). Each pole tooth (5) comprises a pole shoe (5b) at a free end directed to the rotor and a pole shaft (5a) extending from the yoke (4) to the pole shoe (5b). Each coil (8) is wound on a coil carrier (7) and each coil carrier (7) is arranged on a pole tooth (5) in that the respective pole tooth (5) extends through the coil carrier (7). The rotor (2) has a second axial length (M2) that is longer than the first axial length (L2), and each pole tooth (5) further comprises at least one pole extension (10a-10d) extending at least the pole shoe (5b) of the respective pole tooth (5) in axial direction beyond the yoke (4) to an axial end of the rotor (2). Additionally, the pole extensions (10a-10d) consist of a soft magnetic composite material. Due to the pole extensions (10a-10d) you can choose the length of the rotor (2) independently from the axial length of the yoke (4).

## Description

The invention refers to an electric motor comprising a stator core, a plurality of coils and a permanent-magnet rotor, the stator core comprising a yoke having a first axial length, and a number of pole teeth extending radially from the yoke to the rotor, wherein each pole tooth comprises a pole shoe at a free end directed to the rotor and a pole shaft extending from the yoke to the pole shoe, wherein each coil being wound on a coil carrier and each coil carrier being arranged on a pole tooth in that the respective pole tooth extends through the coil carrier.

Electric permanent magnet motors of the aforementioned type are generally known. Usually, the yoke is formed of a stack of laminations to reduce eddy current losses that would be present in a yoke made of a single solid metal piece. The laminations in the stack are isolated against each other. A lamination is a thin sheet of metal, e.g. iron/ steel, usually bonded, welded, or stacked together to form several durable, sometimes hundreds of layers in the stack. Usually, the pole teeth consist of a stack of laminations as well, and the number of laminations in the pole teeth is the same as the number of laminations in the yoke. In some electric motors, the individual laminations of the stator core form a layer of the yoke and, simultaneously, a layer of all the pole teeth so as the pole teeth and the yoke form one piece of stacked laminations.

Generally spoken, a huge amount of iron is used in the`stator and the stator weight is significant. The thickness of the stack defines the axial length of the stator as well as the axial length the pole teeth around which the coils are wound. Therefore, the bigger is the axial length of the pole teeth, the more copper is needed for forming the coils. As copper exhibits a certain electrical resistance that leads to heat losses, the amount of copper in the stator is essentially responsible for the efficiency of the electric motor.

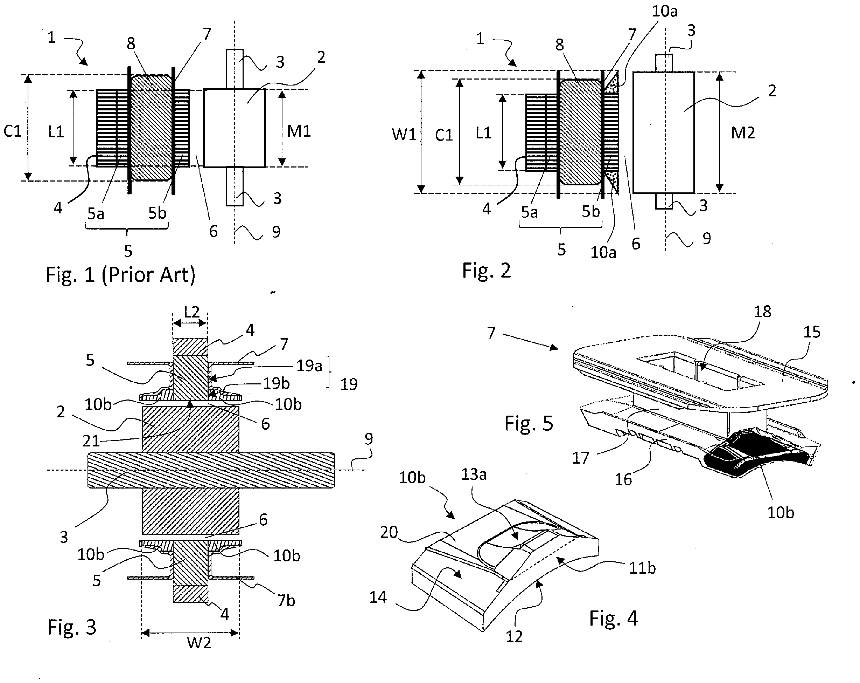

Furthermore, permanent magnet motors usually have rotor magnets and stator packs of equal axial length as shown in figure 1.

A first object of the present invention is to provide an electric motor having a stator with a reduced amount of iron and a reduced stator weight in comparison to a state-of-the-art permanent magnet motor with a rotor of the same axial length. A second object of the present invention is to simultaneously reduce the copper losses, thereby increasing the efficiency of the electric motor.

These objects are solved by means of an electric motor as defined in claim 1. Possible and advantageous further developments are provided in the subclaims and are described hereinafter.

According to the present invention, an electrical motor is proposed the rotor of which exhibits a second axial length that is longer than the first axial length. Considering the other way around, the axial length of the yoke is lesser than the axial length of the rotor. This means that the rotor projects the stator core at at least one axial end of the stator core. In order to nevertheless direct and distribute the magnetic flux along the whole rotor length to the rotor, each pole tooth further comprises at least one pole extension extending at least the pole shoe of the respective pole tooth in axial direction beyond the yoke to an axial end of the rotor. Consequently, the axial length of the pole shoe combined with the pole extension, called extended pole tooth in the following, is longer than the first axial length, i.e. the length of the stator core. This arrangement significantly reduces the amount of iron in the stator and reduces the stator's weight, as lesser laminations are used in comparison to a state-of-the-art permanent magnet motor with a rotor of the same axial length. By saving laminations, the material costs for the stator core are reduced as well.

Preferably, the axial length of the pole shoe combined with the pole extension corresponds to the second axial length, i.e. the axial length of the rotor so that the rotor and the extended pole teeth have the same axial length.

Additionally, by omitting laminations and thereby reducing the axial length of the pole teeth, the axial length of the coils can be reduced as well, saving copper, reducing the copper losses and increasing efficiency of the motor.

Therefore, a main aspect of the present invention is a specific arrangement of permanent magnet motor with reduced stator length compared to the rotor, to save material costs and increase efficiency.

Note that in the context of the present invention the words "axial" and "axially" refer to the rotation axis of the rotor, whereas the words "radial" and "radially" refer to a direction perpendicular to the rotation axis of the rotor.

To ease manufacturing and design of the stator core, it is further proposed to manufacture the pole extensions of a soft magnetic composite material. Soft magnetic materials are generally known in the art. They exhibit reduced losses, especially at high frequencies, and enable specific property profiles with isotropic magnetic properties. Soft magnetic materials however, show poor mechanical properties.

In soft magnetic materials a powder, preferably iron powder or an iron-based alloy powder, having a particle size between 100 and 300µm is used as magnetic material which is coated by an insulating coating having a thickness of approximately 50nm. The material for the insulating coating can be, for example, an oxide like Al₂O₃ (aluminum oxide), SiO₂ (silicon dioxide), TiO₂ (titanium dioxide), or MgO (magnesium oxide), a resin such as polyethyleneimine (PEI) or silicone resin, or a hybrid inorganic-organic composite like Fe₃O₄/Al₂O₃/SiO₂. Oxides are favored for their high electrical resistivity and thermal stability, whereas resins present good formability and adhesion properties. Hybrid inorganic-organic composites combine the benefits of both inorganic and organic materials, aiming to achieve high-temperature stability and good adhesion. The insulating coating is a powder as well. In the manufacturing process, said powders are firstly mixed with each other. Afterwards, an amount of the mixed powder is placed in a mould and compacted therein in order to get individual green bodies which are then heated in an oven. After heat treatment, a post processing step can take place. High precision parts can be manufactured of soft magnetic composite materials.

In the present invention, soft magnetic composite material is used to form the pole extensions which form flux-guiding elements spatially bridging the distance between the axial ends of the pole shoes and the respective axial ends of the rotor. In other words, each pole teeth radially end with a conical shape, seen in an axial cross section. This has the effect that, on one hand, the whole rotor flux is caught and guided towards the pole teeth reduced in their axial length, and on the other hand, that the magnetic stator flux conducted by the individual pole tooth is fanned out or guided to the axial ends of the rotor.

A significant advantage of using the pole extensions according to the present invention arises from the fact that the axial length for the rotor, the stator yoke, and the pole teeth can be defined - independently from each other. This allows various arrangements, more optimized in term of cost and efficiency than a standard construction. By reducing the stator yoke length in comparison with the pole teeth's length and the rotor length the coils are shorter in their total winding length as well so that the copper losses are reduced and efficiency of the motor is increased.

In a preferred embodiment each pole tooth comprises two pole extensions arranged symmetrically. A first pole extension can be present at a first axial end of the respective pole tooth and a second pole extension can be present at a second axial end of the respective pole tooth opposite to the first axial end. Due to this symmetric arrangement the rotor is arranged in front of the stator with its axial centre aligned with the pole teeth's axial centre.

In the proposed electrical motor, the stator core can be manufactured in various ways. For example, the yoke can consist of a stack of laminations. Alternatively or additionally, each pole tooth can consist of a stack of laminations. In an alternative embodiment each pole tooth can consist of the soft magnetic composite material so as to be integrally formed with the at least one pole extension, whereas the yoke remains consisting of a stack of laminations. In this embodiment, the pole teeth can be attached at the yoke in a form-fit manner. In another embodiment, only the pole shoes and pole extensions can be made of the soft magnetic composite material and form integral parts whereas the rest of the stator core, i.e. the yoke and pole shafts, is made in laminations. In yet another embodiment, the stator core can be made entirely of the soft magnetic composite material to get a desired shape. This way, you can benefit from advantages of both materials, soft magnetic composite material for the specific shapes and laminations for their magnetic and mechanical properties.

Where the pole teeth are laminated, the at least one pole extension presents a rear face that directly abuts an axial face of the respective pole tooth. Thus, a magnetic gap is avoided between pole tooth so that the rotor flux is completely and without any losses directed into the.pole teeth.

The pole teeth can form individual parts that are attached to the yoke, e.g. by a press-fit and/ or form-fit connection. This can be realized with laminated pole teeth as well as with pole teeth made of the soft magnetic composite material.

Preferably, the at least one pole extension can have an overall flat rectangular base portion with a concave lower face in form of a cylinder section that is directed to the rotor and that is aligned with the radial face of the pole shoes.

If the pole shoe is laminated, the base portion can have a rear face directly abutting an axial face of the pole shoe in order to avoid any gap.

The at least one pole extension can have a material elevation that rises steadily on the base portion in the direction of the pole shaft. This improves directing the rotor flux into the pole shaft and guiding the stator flux into the pole extensions.

In a preferred embodiment the at least one pole extension can have a block-like portion that is integrally formed with the base portion giving the pole extension an overall L-shaped axial cross section wherein the block-like portion extends the pole shaft in axial direction.

Where the pole teeth are laminated, the block-like portion can have an upper rear face abutting an axial face of the pole shaft to avoid any gap.

Where the pole teeth are made of soft magnetic composite material, the base portion can merge seamlessly into the pole shoe and the block-like portion can merge seamlessly into the pole shaft.

In a preferred embodiment the at least one pole extension can be tightly held at or in the coil carrier. For example, the at least one pole extension can be held in or at the coil carrier by means of a snap-in connection. Alternatively, the at least one pole extension can be embedded in the coil carrier by means of overmoulding the pole extension with the plastic material forming the coil carrier during production of the coil carrier.

The electric motor according to the invention can be part of a circulating pump, in particular a canned motor pump, for example for heating or cooling installations (HVAC applications). Thus, the invention also refers to such a circulating pump comprising an electric motor according to the present invention.

Further features, characteristics, effects and advantages of the invention are explained in more detail hereinafter with reference to examples of embodiments and the accompanying figures. The reference signs contained in the figures retain their meaning from figure to figure. In the figures, reference signs always denote the same or equivalent components, areas, directions or locations as far as specified otherwise.

It should be noted that in the context of the present description the terms "comport", "comprise" or "include" in no way exclude the presence of other features. Furthermore, the use of the indefinite article for an object does not exclude the plural of said object.

Furthermore, the terms or phrases "radial", "axial" and "circumferential" used in this description generally refer to the longitudinal axis of the motor that corresponds to the rotational axis of the motor shaft, unless otherwise specified.

### Brief description of the drawings:

- Fig. 1:: shows a schematic presentation of an arrangement of a stator and a rotor according to the prior art
- Fig. 2:: shows a schematic presentation of an arrangement of a stator and a rotor according to a first embodiment of the invention
- Fig. 3:: shows a cross sectional view of an arrangement of a stator and a rotor according to a second embodiment of the invention
- Fig. 4:: shows one of the pole extensions of figure 3
- Fig. 5:: shows one of the coil carriers of figure 3
- Fig. 6:: shows a schematic presentation of an arrangement of a stator and a rotor according to a third embodiment of the invention
- Fig. 7:: shows a cross sectional view of an arrangement of a stator and a rotor according to a fourth embodiment of the invention
- Fig. 8:: shows two of the pole extensions of figure 7
- Fig. 9:: shows a schematic presentation of an arrangement of a stator and a rotor according to a fifth embodiment of the invention
- Fig. 10:: shows a cross sectional view of an arrangement of a stator and a rotor according to a sixth embodiment of the invention
- Fig. 11:: shows a pole tooth of figure 10

Electric permanent magnet motors like so called brushless DC motors conventionally comprise a stator core, generally designated in the drawings by reference numeral 1, a plurality of electric coils 8 mounted on the stator core and a permanent-magnet rotor 2. Fig. 1 shows this stator-rotor- arrangement in a simplified manner, wherein only one section of the stator core carrying a single coil is visible. For example, 6, 9, 12 or 24 of these stator core sections and coils 8 may be present in a real electric motor. The rotor 2 is arranged in front of the stator core 1 separated from the stator core 1 by an air gap 6. The rotor 2 is fixedly mounted on a motor shaft 3 having an axis of rotation designated by reference numeral 9.

The stator core 1 comprises a yoke 4 and a number of pole teeth 5 extending radially from the yoke 4 to the rotor 2. The number of pole teeth 5 equals the number of electric coils 8. The yoke 4 is an annular component enabling the magnetic field lines to close. In the embodiment of Fig. 1 the pole tooth 5 forms an individual component separate from the yoke 4 but being attached to the yoke 4 by means of a form-fit and/ or press-fit connection. The yoke 4 as well as the pole tooth 5 each consists of a stack of laminations. The yoke 4 has first axial length L1.

The pole tooth 5 shown in Fig. 1, as well as any other pole tooth of the electric motor not shown, comprises a pole shaft 5a and a pole shoe 5b, the pole shaft 5a extending from the yoke 4 to the pole shoe 5b that is arranged at a free end of the pole shaft 5a and directed to the rotor 2. Each coil 8 is wound on a respective coil carrier 7 and each coil carrier 7 is arranged on one pole tooth 5 in that the respective pole tooth 5 extends with its shaft 5a through the coil carrier 7 with the pole shoe 5b projecting from the coil carrier 7 to the rotor 2. The coil carrier 7 is a moulded component made of plastic.

As can be seen in Fig. 1 the rotor 2 has a second axial length M1 that is essentially identical to the axial length L1 of the laminated yoke 4. Additionally, Fig. 1 depicts the maximum length C1 of the coil 8 in axial direction. ,

Now turning to Fig. 2 to 5 a first and second embodiment of the present invention is described in the following.

As apparent from Fig. 2, an eye catching first difference of the present invention to the prior art is the fact that the rotor has a new second axial length M2 that is longer than the first axial length L1. Simply spoken, the rotor 2 is longer in axial direction than the yoke 4 so that the rotor 2 projects beyond the first and last lamination sheet of the laminated pole tooth 5 and laminated yoke 4.

A second difference of the present invention to the prior art in Fig. 1 is the fact the pole tooth 5 further comprises two pole extensions 10a, one at each axial end, wherein each pole extension 10 extends the pole shoe (5b) of the respective pole tooth 5 in axial direction beyond the yoke 4 to an axial end of the rotor 2. Thereby, the pole extensions 10a have the function of bridging elements that bridge the prolongation of the rotor. Technically, on one hand, the pole extensions 10a serves to catch the rotor flux at the axial ends of the rotor 2 and, on the other hand, the pole extensions 10a serves to guide and distribute the stator flux to the axial end portions of the rotor 2. Consequently, the axial length W1 of the pole shoe 5b combined with the pole extensions 10a, called extended pole tooth in the following, is longer than the first axial length L1, i.e. longer in axial direction than the stator core 1. Here, the axial length W1 of the extended pole tooth approximately corresponds to the axial length M2 of the rotor so that the rotor and the extended pole tooth have the same axial length.

In summary, by means of the pole extensions 10a, the axial length of the rotor 2 can be increased without the necessity to axially extending the stator core 2.

From a different perspective, you can simply keep the axial length M1 of the rotor 2 and reduce the axial length of the stator core 1 to a length L2 < L1 as apparent from Fig. 3. This arrangement significantly reduces the amount of iron in the stator and reduces the stator's weight, as lesser laminations are used in comparison to a state-of-the-art permanent magnet motor with a rotor of the same axial length. By saving laminations, the material costs for the stator core are reduced as well. A significant advantage of using the pole extensions 10a according to the present invention arises from the fact that the axial length for the rotor 2, the stator yoke 4, and the pole teeth 5 can be defined independently from each other. This allows various arrangements, more optimized in term of costs and efficiency than a standard construction.

The pole extensions 10a are made of a soft magnetic composite (SMC) material in order to produce them with high precision and quality. In said (SMC) iron powder is used as magnetic material.

In Fig. 2, the pole extensions 10a are schematically shown only, here in a form having a triangle cross section. In other words, their thickness steadily increases from the distal outer end to the proximate inner end situated at the respective pole tooth 5, or more precisely at the respective pole shoe 5b. This shape is considered the first embodiment.

Fig. 3, 4 and 5 presents a more detailed view of the stator construction in general, and of the pole extensions 10b in particular. As the pole extensions 10b exhibit a slightly different form than those in Fig. 2, the pole extensions 10b shown in Fig. 3, 4 and 5 are considered as the second embodiment. Here, the stator core 1 has a reduced axial length L2, i.e. an axial length that is lesser than that of the prior art in Fig. 1, thanks to the omission of laminations, whereas the axial length M1 of the rotor 2 remains the same. Both, the yoke 4 and the pole teeth 5 are laminated. Note that the coil 8 is omitted in Fig. 3 and 5.

Fig. 3 shows an axial cross section of the stator-rotor arrangement comprising two pole teeth opposing each other whereas the rotor 2 is positioned between these two pole teeth. On each of the two axial end faces 19 of the pole teeth 5 a pole extension 10b is arranged so that the extended pole teeth 5 are symmetric. One of these pole extensions 10b is presented in Fig. 4 in a perspective view.

The pole extension 10b is basically symmetric referring to an axial plane intersecting the rotor axis 9. The pole extension 10b has an overall flat rectangular base portion 20 with a concave lower face 12 in form of a cylinder section that is directed to the rotor 2 and that is axial direction aligned with the inner radial face 21 of the pole shoe 5b. The upper surface of the base portion 20 facing the coil 8 has flattenings 14 at its outer periphery in circumferential direction to reduce SMC material and to adapt the shape of the pole extension 10b to the annular shape of the stator, or more precisely to the pole shoes.

The base portion 20 has a rear face 11 directly abutting the axial end face 19 of the pole tooth 5. More precisely, as can be seen in Fig. 3 the axial end face 19 can be divided into an upper end face 19a that is the end face of the pole shaft 5a, and a lower end face 19b that is the end face of the pole shoe 5b, whereas the rear face 11 of the base portion 20 abuts the lower end face 19b, i.e. that one of the pole shoes 5b.

Furthermore, the pole extension 10b has a material elevation 13a that rises steadily on the base portion 20 in the direction of the pole shaft 5a so that the radial thickness of the base portion 20 is greatest in a central portion, at its rear face 11, viewed in circumferential direction. Consequently, as can be seen in Fig. 3, the cross-section of the pole extensions 10b equals the shape of a shoe. This improves directing the rotor flux into the pole shaft 5a and guiding the stator flux into the pole extensions 10b.

In the embodiments shown in Fig. 3 and Fig. 5 the pole extensions 10b are held at the respective coil carriers 7. This is done here by overmoulding the pole extensions 10b during manufacturing the coil carriers 7, so that the pole extensions 10b become embedded in the material of the coil carrier 7 as is apparent from Fig. 5. The coil carrier 7 is a moulded plastic component and the pole extensions 10b are inserts positioned in the respective mould that give the coil carrier 7 its form prior to injection of the plastic into the mould. In an alternative embodiment, however, the pole extensions 10b can be removably mounted in a form-fit manner at the coil carrier 7, e.g. clipsed, or bonded with the coil carrier 7.

Fig. 5 shows the coil carrier 7 comprising an upper flange 15 and a lower flange 16 that are connected with each other by means of a hollow duct 17 of rectangular cross section for encompassing the pole shaft 5a. The upper and lower flanges 15, 16 have openings 18 of the same size and shape as the duct 17 for the pole tooth extending through. The coil 8 is wounded around the duct 17 bordered by the upper and lower flanges 15, 16. The pole extensions 10b are embedded in the lower flange 16 at its axial ends.

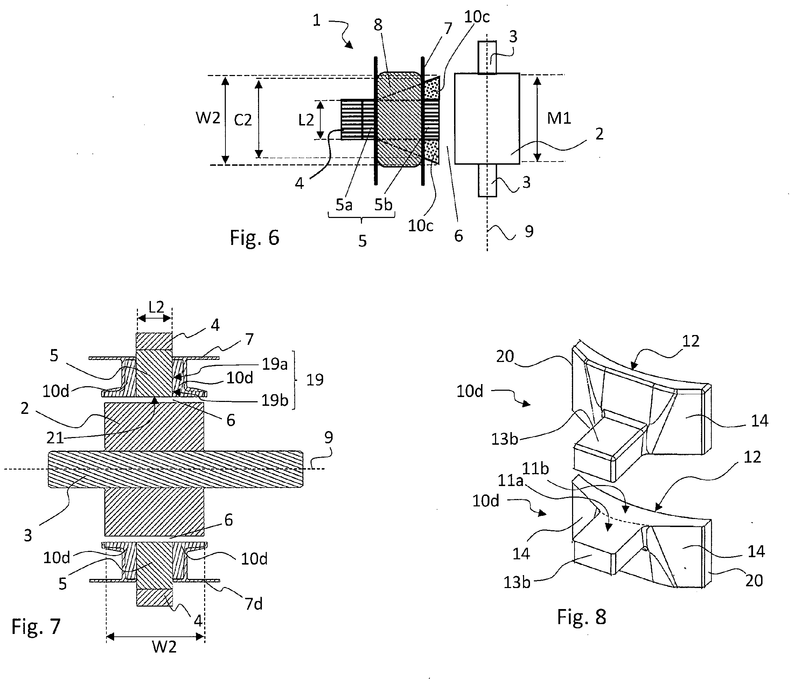

Now turning to Fig. 6 to 8 a third and fourth embodiment of the present invention is described. In Fig. 6 the axial length M1 of the rotor 2 is the same as in Fig. 1, however, the axial length of the stator core 1 is reduced to L2 < L1. The third and fourth embodiment differs from the first and second embodiment in the shape of the pole extensions. The third and fourth embodiments have in common that they not only axially enlarge the pole shoes 5b but also the pole shafts 5a.

In the third embodiment shown in Fig. 6, the pole extensions 10c have a triangle cross section similar to that of the first embodiment. However, the pole extensions 10c extend radially along at least a portion of the pole shaft 5a and into the coil carrier 7. It follows that the duct 17 of the coil carrier 7, in this embodiment, has a conical shape at its axial ends sides to correspond to the shape of the pole extensions.

In the fourth embodiment, shown in Fig. 7 and Fig. 8 the pole extensions 10d have a block-like portion 13b that is integrally formed with the base portion 20 giving the pole extension 10d an overall L-shaped axial cross section wherein the block-like portion 13b extends the pole shaft 5a in axial direction. For this, the block-like portion 13b has an upper rear face 11a abutting the axial end face 19a of the pole shaft 5a. Furthermore, the base portion 20 has a lower rear face 11b abutting the axial end face 19b of the pole shoe 5b. The duct 17 of the coil carrier 7 is adapted to the pole extensions 10d in that its axial length is longer than the pole tooth to enclose the pole extensions 10d as well.

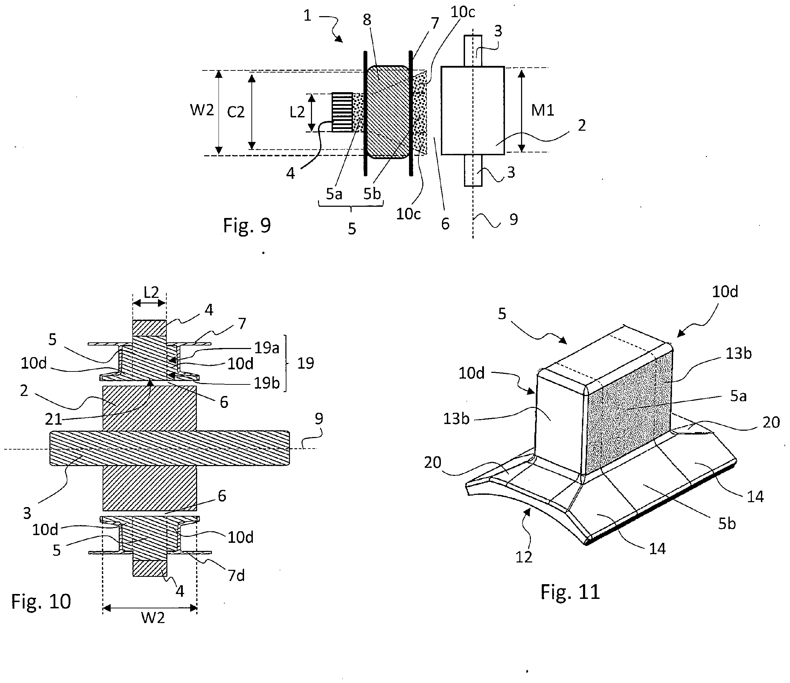

Now turning to Fig. 9 to 11 a fifth and sixth embodiment of the present invention is described. With regard to the shape, the pole extensions 10c of the fifth embodiment correspond to the third embodiment and the pole extensions 10d of the sixth embodiment correspond to the fourth embodiment. However, the main difference here is the fact, that the pole teeth 5 are also made of SMC and form one single piece with the pole extensions 10c, 10d. The yoke 4 however, is still made of laminations. An embodiment of a single-piece extended pole tooth is depicted in Fig. 11. The base portions 20 merge seamlessly into the pole shoe 5b and the block-like portions 13b merge seamlessly into the pole shaft 5c. Dotted lines in Fig. 10 and Fig. 11 indicate the border line where the pole extensions 10d can be considered to merge into the pole tooth 5.

The extended pole teeth 5 can be fixed at the yoke 4 individually by means of a press-fit connection (not shown). This avoids any magnetic gap between the respective pole tooth 5 and the yoke 4. Alternatively or additionally, the extended pole teeth 5 can be fixed by gluing or welding. This overcomes the problem that SMC parts presents a certain brittleness that causes press-fit connection to break easily. In another alternative, the coil carrier 7 around the pole tooth 5 can be used to clip the pole-coil subset onto the yoke 4.

Using pole extensions according to the invention, in all embodiments, you can also reduce the axial length of the stator coils 8, as this length can now be chosen widely independent from the constraining dimensions of the pole teeth. In the third to sixth embodiment the axial coil length is reduced from C1 (Fig. 1 and Fig. 2) to the length C2. Therefore, the coils are shorter in their total winding length so that the copper losses are reduced and efficiency of the motor is increased.

In another embodiment not shown, the yoke can be made of the soft magnetic composite material as well so that the stator core is made entirely of the soft magnetic composite material to get a desired shape.

Note that although all embodiments in the figures refer to electric motors having the rotor 2 arranged inside the yoke concentrically, the basic idea of the invention can also be applied to electric motors with external rotor.

To summarize, the invention will help reducing the amount, and hence the costs, of copper and iron in the stator, and will increase the motor efficiency through lower copper losses.

Any values and dimensions disclosed herein are not to be understood as being strictly limited to the exact numerical values recited. Instead, unless otherwise specified, each such dimension is intended to mean both the recited value and a functionally equivalent range surrounding that value. For example, a temperature disclosed as "180°C" is intended to mean "about 180°C".

It should be noted that the foregoing description is given by way of example only for the purpose of illustration and is in no way limiting the scope of protection of the invention. Features of the invention indicated as "may", "exemplary", "preferred", "optional", "ideal", "advantageous", "optionally", "suitable" or the like are to be regarded as purely optional and likewise do not limit the scope of protection, which is defined exclusively by the claims. To the extent that the foregoing description mentions elements, components, process steps, values or information having known, obvious or foreseeable equivalents, such equivalents are covered by the invention as well. Likewise, the invention includes any changes, variations or modifications to embodiments which involve the substitution, addition, alteration or omission of elements, components, process steps, values or information, so long as the basic idea of the invention is still present, regardless of whether the change, variation or modification results in an improvement or deterioration of an embodiment.

Although the above description of the invention mentions a plurality of physical, non-physical or procedural features in relation to one or more specific embodiment(s), these features may also be used in isolation from this specific embodiment, at least to the extent that they do not require the mandatory presence of other features. Conversely, features mentioned in relation to one or more specific embodiment(s) may be combined as desired with each other as well as with further disclosed or undisclosed features of shown or non-shown embodiments, at least insofar as the features are not mutually exclusive or do not lead to technical incompatibilities.

## Claims

1. Electric motor comprising a stator core (1), a plurality of coils (8) and a permanent-magnet rotor (2), the stator core (1) comprising a yoke (4) having a first axial length (L1), and a number of pole teeth (5) radially extending from the yoke (4) to the rotor (2), wherein each pole tooth (5) comprises a pole shoe (5b) at a free end directed to the rotor and a pole shaft (5a) extending from the yoke (4) to the pole shoe (5b), wherein each coil (8) being wound on a coil carrier (7) and each coil carrier (7) being arranged on a pole tooth (5) in that the respective pole tooth (5) extends through the coil carrier (7), **characterized in that** the rotor (2) has a second axial length (M2) that is longer than the first axial length (L2), and each pole tooth (5) further comprises at least one pole extension (10a-10d) extending at least the pole shoe (5b) of the respective pole tooth (5) in axial direction beyond the yoke (4) to an axial end of the rotor (2), and **in that** the pole extensions (10a-10d) consist of a soft magnetic composite material.

2. Electric motor according to claim 1, **characterized in that** each pole tooth (5) comprises a first pole extension (10a-10d) at a first axial end of the respective pole tooth (5) and a second pole extension (10a-10d) at a second axial end of the respective pole tooth (5) opposite to the first axial end.

3. Electric motor according to claim 1 or 2, **characterized in that** each pole tooth consists of a stack of laminations and the at least one pole extension (10a-10d) presents a rear face (11) that directly abuts an axial face (19) of the respective pole tooth (5).

4. Electric motor according to claim 1, 2 or 3, **characterized in that** the pole teeth (5) form individual parts that are attached at the yoke (4).

5. Electric motor according to one of the foregoing claims, **characterized in that** the at least one pole extension (10a - 10d) has an overall flat rectangular base portion (20) with a concave lower face (12) in form of a cylinder section directed to the rotor (2) and aligned with the radial face (21) of the pole shoes (5b).

6. Electric motor according to claim 5, **characterized in that** the base portion (20) has a rear face (11, 11b) directly abutting an axial face (19b) of the pole shoe (5b).

7. Electric motor according to claim 5 or 6, **characterized in that** the at least one pole extension (10a - 10d) has a material elevation (13a) that rises steadily on the base portion (20) in the direction of the pole shaft (5a).

8. Electric motor at least according to claim 5 or 6, **characterized in that** the at least one pole extension (10a - 10d) has a block-like portion (13) that is integrally formed with the base portion (20) giving the pole extension (10a - 10d) an overall L-shaped axial cross section wherein the block-like portion (13) extends the pole shaft (5a) in axial direction.

9. Electric motor according to claim 8, **characterized in that** the block-like portion (13) has an upper rear face (11a) abutting an axial face (19a) of the pole shaft (5a).

10. Electric motor according to one of the claims 1, 2, 4, 5, 7 or 8 both of which referring back to claim 5 only, **characterized in that** each pole tooth (5') consists of the soft magnetic composite material and is integrally formed with the at least one pole extension (10d).

11. Electric motor according to claim 13, **characterized in that** the base portion (20) merges seamlessly into the pole shoe (5a) and the block-like portion (13) merges seamlessly into the pole shaft (5a).

12. Electric motor according to one of the foregoing claims, **characterized in that** the at least one pole extension (10a - 10d) is tightly held at or in the coil carrier (7).

13. Electric motor according to claim 12, **characterized in that** the at least one pole extension (10a - 10d) is held in or at the coil carrier (7) by means of a snap-in connection.

14. Electric motor according to claim 12, **characterized in that** the at least one pole extension (10a - 10d) is embedded in the coil carrier (7) by means of overmoulding the at least one pole extension (10a -10d) with the plastic material forming the coil carrier (7) during production of the coil carrier (7).

15. Circulating pump, in particular a canned motor pump, comprising an electric motor according to one of the foregoing claims.
